# EUROPÄISCHE PATENTANMELDUNG

(11) **EP 3 584 734 A1**
(43) Veröffentlichungstag der Anmeldung: **25.12.2019**
(21) Anmeldenummer: 18178498.4
(22) Anmeldetag: 19.06.2018
(51) Int. Cl.: G06F 21/60, G06F 21/72

(54) **HARDWARE-SICHERHEITSMODUL**

(71) Anmelder: Siemens Aktiengesellschaft, 80333 München (DE)
(72) Erfinder: Falk, Rainer, 85586 Poing (DE); Feist, Christian Peter, 80689 München (DE); Schneider, Daniel, 80796 München (DE)

(57) **Zusammenfassung**

Es wird ein Hardware-Sicherheitsmodul zum Durchführen von sicherheitsrelevanten Operationen an sicherheitsrelevanten Daten vorgeschlagen. Das Hardware-Sicherheitsmodul umfasst:
eine erste Schnittstelle zum Verbinden des Hardware-Sicherheitsmoduls mit einem Computersystem und zum Empfangen der sicherheitsrelevanten Daten, an denen die relevanten Operationen durchzuführen sind, von dem Computersystem; und
eine zweite Schnittstelle zum Verbinden des Hardware-Sicherheitsmoduls mit einem weiteren Hardware-Sicherheitsmodul.

Es können mehrere Hardware-Sicherheitsmodule miteinander verbunden werden. Zwei miteinander verbundene Hardware-Sicherheitsmodule können zum Beispiel zum sicheren Datenaustausch zwischen Netzwerken eingesetzt werden.

## Beschreibung

Die vorliegende Erfindung betrifft ein Hardware-Sicherheitsmodul zum Durchführen von sicherheitsrelevanten Operationen an sicherheitsrelevanten Daten. Ferner betrifft die vorliegende Erfindung Anwendungen des Hardware-Sicherheitsmoduls, zum Beispiel in einem Hardware-Sicherheitsmodulsystem, in einer sicheren Kommunikationsvorrichtung und in einer Schutzvorrichtung.

Hardware-Sicherheitsmodule können zum Beispiel eingesetzt werden, um sicherheitsrelevante Daten eines Computersystems zu schützen und so die Sicherheit der sicherheitsrelevanten Daten und/oder des Computersystems zu gewährleisten. Hierzu kann ein Hardware-Sicherheitsmodul über eine dazu geeignete Schnittstelle mit dem Computersystem verbunden sein und über diese Schnittstelle die zu schützenden sicherheitsrelevanten Daten zugesendet bekommen.

Vor diesem Hintergrund besteht eine Aufgabe der vorliegenden Erfindung darin, ein verbessertes Hardware-Sicherheitsmodul zu schaffen.

Gemäß einem ersten Aspekt wird ein Hardware-Sicherheitsmodul zum Durchführen von sicherheitsrelevanten Operationen an sicherheitsrelevanten Daten vorgeschlagen. Das Hardware-Sicherheitsmodul umfasst:
eine erste Schnittstelle zum Verbinden des Hardware-Sicherheitsmoduls mit einem Computersystem und zum Empfangen der sicherheitsrelevanten Daten, an denen die relevanten Operationen durchzuführen sind, von dem Computersystem; und
eine zweite Schnittstelle zum Verbinden des Hardware-Sicherheitsmoduls mit einem weiteren Hardware-Sicherheitsmodul.

Das Hardware-Sicherheitsmodul kann insbesondere über die zusätzliche zweite Schnittstelle mit einem weiteren Hardware-Sicherheitsmodul verbunden werden. Zwei Hardware-Sicherheitsmodule zu verbinden kann zum Beispiel zur sicheren Kommunikation zwischen zwei Netzwerken und/oder Vorrichtung vorteilhaft sein. Dieses wird im Folgenden noch näher beschrieben.

Das Hardware-Sicherheitsmodul (englisch auch "hardware security module" oder HSM) kann sowohl eine erste als auch eine zweite Schnittstelle umfassen. Die erste Schnittstelle kann mit dem Computersystem verbunden werden, um dem Hardware-Sicherheitsmodul die sicherheitsrelevanten Daten von dem Computersystem zukommen zu lassen.

Das Computersystem ist zum Beispiel ein Computer, insbesondere ein Personal Computer (PC) oder ein Industriecomputer, ein Server und/oder eine Steuereinrichtung. Die sicherheitsrelevanten Daten sind insbesondere Daten, die für die Sicherheit des Computersystems eine wesentliche Rolle spielen. Es kann sich dabei zum Beispiel um Daten handeln, die kryptographische Schlüssel, Passwörter und/oder geheime Informationen enthalten.

Das Hardware-Sicherheitsmodul kann die sicherheitsrelevanten Daten insbesondere schützen, indem es die sicherheitsrelevanten Operationen an den sicherheitsrelevanten Daten durchführt. Diese Operationen umfassen zum Beispiel ein kryptographisches Verschlüsseln der sicherheitsrelevanten Daten, ein Erstellen eines Zertifikats, eine Merkmalsanalyse von Bilddaten, z.B. eines Fingerabdrucks oder eines Gesichts oder einer Maschine oder eines gefertigten Objekts, oder dergleichen. Die Operationen können auch als Sicherheitsfunktionen betrachtet werden.

Das Hardware-Sicherheitsmodul kann dabei eine Hardwareeinrichtung sein, die insbesondere getrennt von dem Computersystem vorliegt und/oder angeordnet ist. Insbesondere führt das Hardware-Sicherheitsmodul kritische Sicherheitsfunktionen durch. Diese kritischen Sicherheitsfunktionen können ausgelagert in dem Hardware-Sicherheitsmodul durchgeführt werden, sodass sie nicht auf dem Computersystem selbst durchgeführt werden müssen. Dieses ist besonders dann vorteilhaft, wenn es sich bei dem Computersystem um eine offene Plattform handelt. Insbesondere kann dadurch die Sicherheit des Computersystems erhöht werden.

Darüber hinaus kann das Hardware-Sicherheitsmodul speziell geschützt sein, beispielsweise anhand einer sicheren Boot-Funktion, durch "File System Encryption", Busverschlüsselung, Tamperüberwachung oder dergleichen.

Bei der ersten Schnittstelle handelt es sich zum Beispiel um eine USB-Schnittstelle, eine serielle Schnittstelle, eine PCIe-Schnittstelle (Peripheral Component Interconnect Express, insbesondere PCIe 5.0 aus 2017), eine SCSI-Schnittstelle (Small Computer System Interface), eine Netzwerkschnittstelle, insbesondere eine Ethernet-Schnittstelle, oder dergleichen. Bei der ersten und der zweiten Schnittstelle handelt es sich insbesondere um Schnittstellen unterschiedlicher Arten. Beispiele für die zweite Schnittstelle werden im Folgenden noch genannt.

Die zweite Schnittstelle dient insbesondere dazu, das weitere Hardware-Sicherheitsmodul mit dem Hardware-Sicherheitsmodul zu verbinden. Das weitere Hardware-Sicherheitsmodul ist insbesondere ein Hardware-Sicherheitsmodul der gleichen Art wie das Hardware-Sicherheitsmodul und kann auch eine erste und eine zweite Schnittstelle aufweisen. Die beiden Hardware-Sicherheitsmodule sind insbesondere über deren jeweiligen zweiten Schnittstellen miteinander verbunden. Die Verbindung zwischen den beiden Hardware-Sicherheitsmodulen dient insbesondere dem direkten Austausch von Daten zwischen den beiden Hardware-Sicherheitsmodulen. Bei der Verbindung zwischen den beiden Hardware-Sicherheitsmodulen, die über die zweite Schnittstelle erfolgt, handelt es sich insbesondere um die einzige Verbindung zwischen den beiden Hardware-Sicherheitsmodulen, über die Daten übertragen werden können. Bei den zwischen den Hardware-Sicherheitsmodulen ausgetauschten Daten handelt es sich insbesondere um die sicherheitsrelevanten Daten, um Tamperdaten und/oder um durch die Hardware-Sicherheitsmodule erzeugte Daten.

Gemäß einer Ausführungsform ist das Hardware-Sicherheitsmodul ein programmierbares Sicherheitsmodul mit umprogrammierbaren sicherheitsrelevanten Operationen.

Die sicherheitsrelevanten Operationen können insbesondere über das an der ersten Schnittstelle angebundene Computersystem umprogrammiert, also verändert werden. Es ist auch möglich, das Hardware-Sicherheitsmodul vor einer ersten Inbetriebnahme zu programmieren oder umzuprogrammieren. Durch die Umprogrammierbarkeit des Hardware-Sicherheitsmoduls können zum Beispiel Anforderungen für die Sicherheit der sicherheitsrelevanten Daten besser erfüllt werden. Die sicherheitsrelevanten Operationen werden durch die Umprogrammierbarkeit des Hardware-Sicherheitsmoduls insbesondere flexibel und/oder manipulationsgeschützt realisiert. Zum Umprogrammieren des Sicherheitsmoduls kann Programmcode auf das Sicherheitsmodul über die erste Schnittstelle geladen werden, z.B. Binärcode, Bytecode, Source-Code, Script-Code.

In weiteren Ausführungsformen kann das Hardware-Sicherheitsmodul nach der Programmierung und/oder Umprogrammierung versiegelt werden, um Änderungen einer geladenen Hardware-Sicherheitsmodul-Applikation zu verhindern. Nach einem Versiegeln eines Sicherheitsmoduls kann der geladene Programmcode nicht mehr modifiziert werden. Es ist jedoch in einigen Ausführungsformen möglich, dass durch eine Rücksetzoperation in den Herstellungs-Ursprungszustand ("factory reset") das Sicherheitsmodul in eine definierte Initialkonfiguration zurückversetzt wird.

Gemäß einer weiteren Ausführungsform umfasst die zweite Schnittstelle einen Anschluss für ein optisches Kopplungsmittel, insbesondere für eine optische Faser, einen Anschluss für ein drahtgebundenes Kopplungsmittel und/oder einen Anschluss für ein drahtloses Kopplungsmittel.

Das Kopplungsmittel kann zur Kopplung der beiden Hardware-Sicherheitsmodule verwendet werden. Die optische Faser (auch Lichtwellenleiter) ist insbesondere eine Glasfaser oder eine Kunststofffaser. Das drahtgebundene Kopplungsmittel kann eine I2C (integrated integrated circuit, zum Beispiel Version 6, 2014), SPI (Serial Peripheral Interface), RS232 (Recommended Standard 232), USB (Universal Serial Bus, zum Beispiel Version USB 3.x) Kopplung sein. Ferner kann als drahtloses Kommunikationsmittel eine Funk-basierte Kopplung, wie zum Beispiel Bluetooth, WLAN und/oder ZigBee eingesetzt werden.

Der Anschluss der zweiten Schnittstelle kann dem verwendeten Kopplungsmittel entsprechend ausgewählt werden, und zum Beispiel als ein USB-Anschluss, ein SPI-Anschluss oder dergleichen ausgebildet sein.

Die zweite Schnittstelle ist insbesondere ansprechbar, indem die sicherheitsrelevanten Operationen des Hardware-Sicherheitsmoduls, wie zuvor beschrieben, entsprechend programmiert werden. So können Daten in Abhängigkeit der programmierten sicherheitsrelevanten Operationen an das weitere Hardware-Sicherheitsmodul übertragen werden und/oder von diesem empfangen werden.

Gemäß einer weiteren Ausführungsform ist das Hardware-Sicherheitsmodul eingerichtet, über die zweite Schnittstelle sicherheitsrelevante Daten von dem weiteren Hardware-Sicherheitsmodul zu empfangen, an denen die relevanten Operationen durchzuführen sind.

Gemäß einer weiteren Ausführungsform ist das Hardware-Sicherheitsmodul und/oder das weitere Hardware-Sicherheitsmodul ein Trusted Platform Module (TPM). Insbesondere handelt es sich bei dem TPM um einen Chip gemäß dem Standard TPM 2.0 (2014), der um die zweite Schnittstelle erweitert wurde. Ein solches Trusted Platform Module Sicherheitsmodul unterstützt insbesondere die Übertragung von Daten über die zweite Schnittstelle an ein zweites Trusted Platform Module Sicherheitsmodul. Beispielsweise können interne Schlüssel, Zählerstand eines monotonen Zählers oder das Ergebnis einer kryptographischen Operation über die zweite Schnittstelle dem zweiten Trusted Platform Module Sicherheitsmodul übertragen werden. Dies ermöglicht insbesondere die geschützte Übertragung von sensiblen Daten an ein zweites Trusted Platform Module Sicherheitsmodul, obwohl die sensiblen Daten über die erste Schnittstelle des Trusted Platform Module Sicherheitsmoduls nicht auslesbar sind.

Gemäß einer weiteren Ausführungsform ermöglicht die zweite Schnittstelle einen bidirektionalen Austausch von Daten mit dem weiteren Hardware-Sicherheitsmodul oder lediglich einen unidirektionalen Austausch von Daten mit dem weiteren Hardware-Sicherheitsmodul.

Der Austausch von Daten zwischen den Hardware-Sicherheitsmodulen, welcher über das Kopplungsmittel erfolgen kann, kann unidirektional oder bidirektional sein. Anders ausgedrückt, kann das Kopplungsmittel zulassen, dass das Hardware-Sicherheitsmodul über die zweite Schnittstelle sowohl Daten empfangen als auch senden kann oder dass das Hardware-Sicherheitsmodul über die zweite Schnittstelle nur Daten empfangen oder nur Daten senden kann.

Hierzu kann die zweite Schnittstelle unidirektional oder bidirektional ausgelegt sein. Sie kann auch mehrere unidirektionale Verbindungen zum weiteren Hardware-Sicherheitsmodul erlauben. So können zum Beispiel eine unidirektionale Verbindung lediglich zum Empfangen von Daten und eine andere unidirektionale Verbindung zum Senden von Daten vorgesehen sein. Eine unidirektionale Verbindung ermöglicht insbesondere eine verlässliche Realisierung einer Einwegkommunikation. Es kann insbesondere auf Datendioden verzichtet werden.

Gemäß einer weiteren Ausführungsform sind die sicherheitsrelevanten Operationen zum Schutz der Hardware und/oder der Software des Computersystems durchführbar.

Der Schutz der Hardware des Computersystems kann auch als Tamperschutz bezeichnet werden. Zum Schutz der Hardware des Computersystems kann das Hardware-Sicherheitsmodul zum Beispiel einen Tampersensor aufweisen, mit dem physikalische Eigenschaften des Computersystems erfasst werden können, um einen physikalischen Angriff auf das Computersystem zu erkennen. Mit den Tampersensoren kann zum Beispiel eine Bohrschutzfolie des Hardware-Sicherheitsmoduls überwacht werden.

Zum Schutz der Software des Computersystems können die sicherheitsrelevanten Operationen ein Entschlüsseln, Verschlüsseln, Signieren, Überprüfen, Ändern, Analysieren, Löschen und/oder Speichern der sicherheitsrelevanten Daten umfassen. Bei diesen Funktionen kann es sich um kryptographische Funktionen handeln. Das Entschlüsseln und/oder Verschlüsseln der Daten kann anhand eines kryptographischen Schlüssels erfolgen. Dieser Schlüssel kann als symmetrischer oder asymmetrischer Schlüssel durch das Hardware-Sicherheitsmodul selbst erzeugt werden. Bei dem Überprüfen kann es sich um eine Signaturprüfung der sicherheitsrelevanten Daten handeln. Bei diesen Funktionen kann es sich auch um Analysefunktionen handeln, z.B. zur Merkmalsextraktion oder Signalverarbeitung.

Das Hardware-Sicherheitsmodul kann ferner dazu geeignet sein, Schlüssel zu erzeugen, Schlüssel abzuleiten und/oder Schlüssel zu löschen.

Neben einer kryptographischen Verarbeitung der sicherheitsrelevanten Daten kann das Hardware-Sicherheitsmodul ferner geeignet sein, die sicherheitsrelevanten Daten in einer Vorverarbeitung mittels Analysealgorithmen, wie zum Beispiel Mustererkennung und/oder Kalmann-Filterung, und/oder Datenkompression zu verarbeiten.

Gemäß einem zweiten Aspekt wird ein Hardware-Sicherheitsmodulsystem vorgeschlagen. Das Hardware-Sicherheitsmodulsystem umfasst:
ein erstes Hardware-Sicherheitsmodul gemäß dem ersten Aspekt oder gemäß einer Ausführungsform des ersten Aspekts;
ein zweites Hardware-Sicherheitsmodul gemäß dem ersten Aspekt oder gemäß einer Ausführungsform des ersten Aspekts; und
ein Kopplungsmittel zum Verbinden der zweiten Schnittstelle des ersten Hardware-Sicherheitsmoduls und der zweiten Schnittstelle des zweiten Hardware-Sicherheitsmoduls.

Das erste Hardware-Sicherheitsmodul sowie das zweite Hardware-Sicherheitsmodul umfassen insbesondere jeweils eine zweite Schnittstelle, über die sie miteinander verbunden sind und Daten austauschen können.

Die für das vorgeschlagene Hardware-Sicherheitsmodul beschriebenen Ausführungsformen und Merkmale gelten für das vorgeschlagene Hardware-Sicherheitsmodulsystem entsprechend.

Gemäß einem dritten Aspekt wird eine sichere Kommunikationsvorrichtung zum sicheren Übertragen von Kommunikationsdaten zwischen einer ersten und einer zweiten Einrichtung vorgeschlagen, wobei die erste und die zweite Einrichtung lediglich über die sichere Kommunikationsvorrichtung verbunden sind. Die sichere Kommunikationsvorrichtung umfasst:
das Hardware-Sicherheitsmodulsystem gemäß dem zweiten Aspekt oder gemäß einer Ausführungsform des zweiten Aspekts;
wobei das erste Hardware-Sicherheitsmodul und das zweite Hardware-Sicherheitsmodul eingerichtet sind, die Kommunikationsdaten über das Kopplungsmittel auszutauschen.

Die für das vorgeschlagene Hardware-Sicherheitsmodul beschriebenen Ausführungsformen und Merkmale gelten für die vorgeschlagene sichere Kommunikationsvorrichtung entsprechend.

Die sichere Kommunikationsvorrichtung kann als Anwendungsbeispiel für das Hardware-Sicherheitsmodul gemäß dem ersten Aspekt oder gemäß einer Ausführungsform des ersten Aspekts betrachtet werden. Das aus zwei miteinander verbundenen Hardware-Sicherheitsmodulen gebildete Hardware-Sicherheitsmodulsystem kann derart zwischen zwei Einrichtungen gesetzt werden, dass die gesamte Kommunikation zwischen den beiden Einrichtungen über das Hardware-Sicherheitsmodulsystem erfolgt. Die sichere Kommunikationsvorrichtung kann dabei als Kommunikationsschleuse für die beiden Einrichtungen betrachtet werden. Bei den Einrichtungen kann es sich um Netzwerke handeln.

Dabei kann sichergestellt werden, dass die Daten, die zwischen den Einrichtungen ausgetauscht werden, geschützt übertragen werden. Es kann zum Beispiel auch sichergestellt werden, dass nur ausgewählte Daten, insbesondere Daten mit bestimmten Sicherheitsvoraussetzungen, zwischen den Einrichtungen übertragen werden. Für den Fall, dass die Hardware-Sicherheitsmodule der sicheren Kommunikationsvorrichtung programmierbare Sicherheitsmodule sind, kann die Datenübertragen zwischen den Einrichtungen über das Umprogrammieren der sicherheitsrelevanten Operationen gesteuert werden.

Solch eine sichere Kommunikationsvorrichtung ist besonders vorteilhaft, wenn es sich bei einer Einrichtung um eine vertrauenswürdige (sichere) und bei der anderen Einrichtung um eine nicht vertrauenswürdige (nicht sichere) Einrichtung handelt, weil auch in diesem Fall Daten zwischen den Einrichtungen übertragen werden können, ohne die Sicherheit der vertrauenswürdigen Einrichtung zu kompromittieren.

Die sichere Kommunikationsvorrichtung bietet insbesondere eine einfach zu realisierende Lösung zur rückwirkungsfreien Datenübertragung zwischen zwei Einrichtungen. Dabei können die beiden Einrichtungen über das Kopplungsmittel gemäß dem Sicherheitsstandard IEC 62443 Daten miteinander zwischen physikalisch isolierten Netzwerkzonen bzw. Security-Zonen austauschen. Ein Sicherheitsmodul kann dabei als Ansteckmodul (IO-Modul) für ein Automatisierungssystem, z.B. eine speicherprogrammierbare Steuerung, ausgebildet sein. Dies ermöglicht insbesondere, Daten des Automatisierungssystems, das sich in einer physikalisch isolierten Netzwerk-Zone befindet, über das Sicherheitsmodul auf sichere Weise zu übertragen. So können zum Beispiel Überwachungsdaten des Automatisierungssystems, zum Beispiel zur Integritätsüberwachung des Automatisierungssystems, oder Projektierungsdaten zur Konfiguration des Automatisierungssystems, auf sichere Weise übermittelt werden, obwohl keine Netzwerkverbindung besteht.

Darüber hinaus kann die sichere Kommunikationseinrichtung auch als eine Einweg-Datenschleuse realisiert werden, in der ein Datenfluss nur in eine Richtung erfolgen kann.

Gemäß einer Ausführungsform ist die erste Einrichtung Teil eines Automatisierungsnetzwerks und die zweite Einrichtung eines externen Netzwerks. In diesem Fall handelt es sich bei dem Automatisierungsnetzwerk insbesondere um ein vertrauenswürdiges Netzwerk und bei dem externen Netzwerk um ein nicht vertrauenswürdiges Netzwerk. Das Automatisierungsnetzwerk kann ein Industrienetzwerk sein, insbesondere ein Automatisierungsnetzwerk eines industriellen Steuerungssystems.

Gemäß einer weiteren Ausführungsform handelt es sich bei der ersten und der zweiten Einrichtung jeweils um ein Feldgerät.

Gemäß einer vierten Ausführungsform wird eine Schutzvorrichtung zum Schützen von zwei redundanten Einrichtungen vorgeschlagen. Die Schutzvorrichtung umfasst:
ein Hardware-Sicherheitsmodulsystem gemäß dem zweiten Aspekt; wobei
das erste Hardware-Sicherheitsmodul Teil der ersten Einrichtung und das zweite Hardware-Sicherheitsmodul Teil der zweiten Einrichtung ist; und
das erste Hardware-Sicherheitsmodul und das zweite Hardware-Sicherheitsmodul eingerichtet sind, sich über das Kopplungsmittel gegenseitig zu synchronisieren.

Die für das vorgeschlagene Hardware-Sicherheitsmodul beschriebenen Ausführungsformen und Merkmale gelten für die vorgeschlagene Schutzvorrichtung entsprechend.

Die Schutzvorrichtung kann als weiteres Anwendungsbeispiel für das Hardware-Sicherheitsmodul gemäß dem ersten Aspekt oder gemäß einer Ausführungsform des ersten Aspekts betrachtet werden. Die zwei redundanten Einrichtungen können Teil eines Servers sein, dessen Sicherheit und Verfügbarkeit wichtig sind. Die Einrichtungen können dahingehend redundant sein, dass sie jeweils ein Hardware-Sicherheitsmodul aufweisen, die ihren internen Zustand untereinander synchronisieren. Das Synchronisieren der Hardware-Sicherheitsmodule kann einen Austausch von Sitzungsschlüssel, Initialisierungsvektorwerte, Zählerwerte und/oder monotoner Zähler über das Kopplungsmittel umfassen. Insbesondere werden Informationen, die die sicherheitsrelevanten Operationen betreffen, übermittelt.

Die Schutzvorrichtung kann ferner zur gegenseitigen Überwachung der beiden Einrichtungen eingesetzt werden. Wenn die eine Einrichtung ausfällt, kann die andere Einrichtung die Verarbeitung der sicherheitsrelevanten Daten problemlos übernehmen, weil alle sicherheitsrelevanten Operationen auch in der anderen Einrichtung vorliegen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein Hardware-Sicherheitsmodul gemäß einer ersten Ausführungsform;
Fig. 2 zeigt ein Hardware-Sicherheitsmodulsystem;
Fig. 3 zeigt ein Hardware-Sicherheitsmodul gemäß einer zweiten Ausführungsform;
Fig. 4 zeigt ein sicheres System mit einer sicheren Kommunikationsvorrichtung gemäß einer ersten Ausführungsform;
Fig. 5 zeigt ein weiteres sicheres System mit einer sicheren Kommunikationsvorrichtung gemäß einer zweiten Ausführungsform;
Fig. 6 zeigt ein geschütztes System mit einer Schutzvorrichtung; und
Fig. 7 zeigt ein Hardware-Sicherheitsmodul gemäß einer dritten Ausführungsform.

In den Figuren sind gleiche oder funktionsgleiche Elemente mit denselben Bezugszeichen versehen worden, sofern nichts anderes angegeben ist.

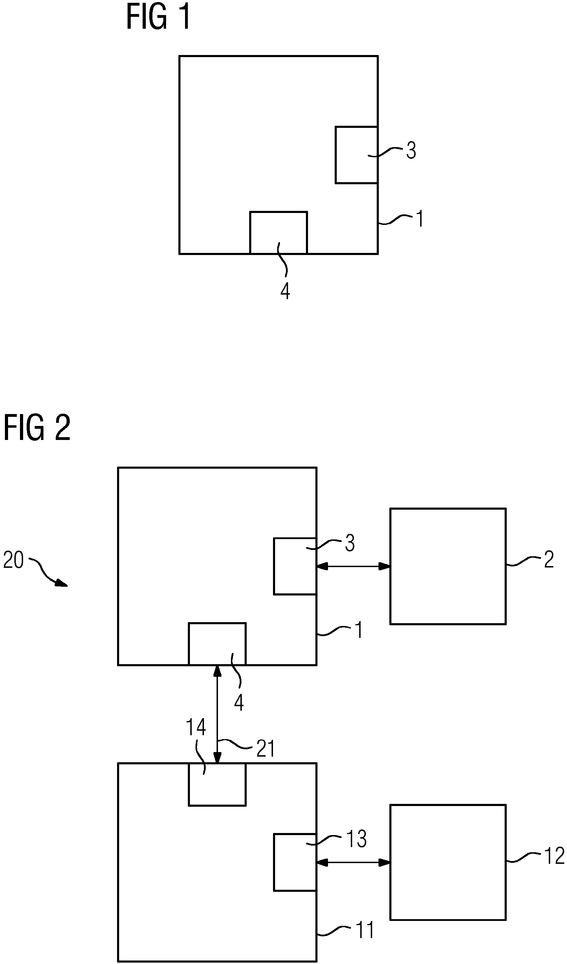

Die Fig. 1 zeigt ein Hardware-Sicherheitsmodul (HSM) 1 gemäß einer ersten Ausführungsform. Das HSM 1 umfasst eine erste Schnittstelle 3, welches als USB-Schnittstelle realisiert ist, sowie eine zweite Schnittstelle 4, welche als optische Schnittstelle für eine Glasfaser realisiert ist. Statt einer Glasfaser kann auch ein anderer Lichtwellenleiter verwendet werden, insbesondere eine Kunststofffaser (plastic optical fiber).

Über die erste Schnittstelle 3 kann das HSM 1 mit einem Computersystem 2 verbunden werden. Dies ist in der Fig. 2 dargestellt, welche ein Hardware-Sicherheitsmodulsystem 20 zeigt, in dem zwei HSM 1, 11 miteinander verbunden sind. Bei dem Computersystem 2 handelt es sich hier um einen Industriecomputer (Industrie-PC).

Die zweite Schnittstelle 4 dient dazu, das HSM 1 mit dem weiteren HSM 11 zu verbinden. Das HSM 11 ist analog zum HSM 1 ausgebildet und umfasst eine erste Schnittstelle 13 zum Verbinden mit einem Computersystem 12 sowie eine zweite Schnittstelle 14 zum Verbinden mit der zweiten Schnittstelle 4 des HSM 1.

Die beiden zweiten Schnittstellen 4, 14 sind in dem Hardware-Sicherheitsmodulsystem 20 der Fig. 2 über ein Kopplungsmittel 21 miteinander verbunden. Das Kopplungsmittel 21 ist dabei als eine Glasfaser realisiert, über die bidirektional Daten zwischen den HSM 1, 11 übertragen werden können.

Das HSM 1 ist zudem geeignet, über die erste Schnittstelle 3 sicherheitsrelevante Daten von dem Computersystem 2 zu erhalten. Bei den sicherheitsrelevanten Daten handelt es sich um zu verschlüsselnde Daten. Das HSM 1 führt an den empfangenen sicherheitsrelevanten Daten sicherheitsrelevante Operationen durch. Diese Operationen umfassen ein Erzeugen von kryptographischen Schlüsseln sowie ein Verschlüsseln der sicherheitsrelevanten Daten mit den erzeugten Schlüsseln. Weitere mögliche Operationen umfassen eine Merkmalsanalyse von Bilddaten, z.B. eines Fingerabdrucks oder eines Gesichts oder einer Maschine oder eines gefertigten Objekts, oder die Analyse von mechanischen Schwingungsdaten, oder das Ausführen eines neuronalen Netzes.

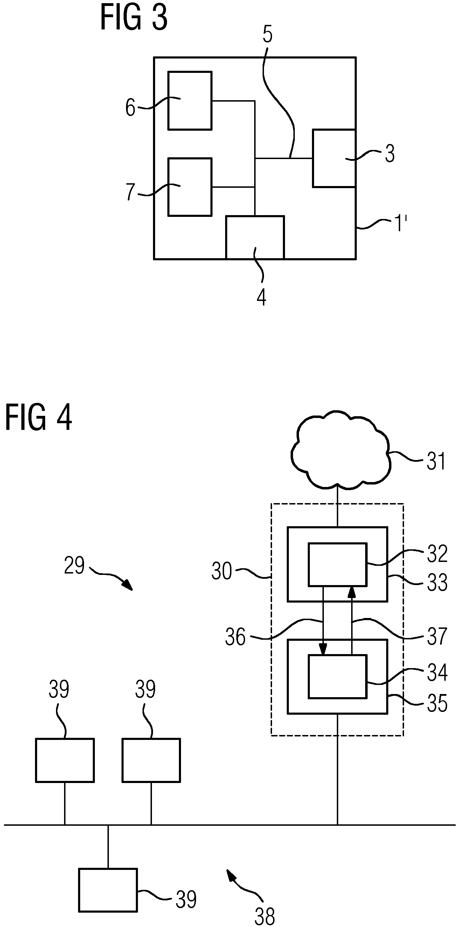

Die Fig. 3 zeigt ein HSM 1' gemäß einer zweiten Ausführungsform. Das HSM 1' der zweiten Ausführungsform unterscheidet sich von dem HSM 1 der ersten Ausführungsform (Fig. 1) dadurch, dass es zusätzlich eine Speichereinheit 6 und eine Durchführeinheit 7 aufweist.

Die Speichereinheit 6 ist ein Arbeitsspeicher (RAM), auf dem die sicherheitsrelevanten Operationen gespeichert sind. Die sicherheitsrelevanten Operationen werden über die erste Schnittstelle 3 durch das Computersystem 2 programmiert. Die sicherheitsrelevanten Operationen können während des Betriebs umprogrammiert werden. Bei dem HSM 1' handelt es sich somit um ein programmierbares HSM.

Mit der Durchführeinheit 7 werden die in der Speichereinheit 6 gespeicherten sicherheitsrelevanten Operationen an den sicherheitsrelevanten Daten durchgeführt.

Die Fig. 4 zeigt ein sicheres System 29 mit einer sicheren Kommunikationsvorrichtung 30 gemäß einer ersten Ausführungsform. Neben der sicheren Kommunikationsvorrichtung 20 umfasst das System 29 ein öffentliches Netzwerk 31, welches hier das Internet ist, sowie ein privates Netzwerk 38, welches hier ein Automatisierungsnetzwerk ist. Das Automatisierungsnetzwerk 38 umfasst drei Feldgeräte 39 und ist physikalisch (auf Netzwerkebene) geschlossen.

Die Sicherheit des Automatisierungsnetzwerk 38 ist hier besonders wichtig. Es ist zum Beispiel sicherzustellen, dass keine geheimen Daten des Automatisierungsnetzwerks 38 nach außen, also ins Internet 31, geschickt werden. Es ist auch wichtig, dass keine schädlichen Daten in das Automatisierungsnetzwerk 38 gelangen. Die Sicherheit des Automatisierungsnetzwerks 38 wird durch die sichere Kommunikationsvorrichtung 30 erhöht. Besonders sensible Automatisierungsnetzwerke, zum Beispiel für eine Safety-kritische Steuerung in der Bahnsicherungstechnik, in Kraftwerken oder in prozesstechnischen Anlagen, sind häufig physikalisch isoliert. Dies wird auch als "air gap" bezeichnet. Trotzdem besteht jedoch ein Bedarf, gewisse Daten, z.B. Überwachungsdaten oder Diagnosedaten des besonders sensiblen Automatisierungssystems, bereitzustellen, ohne das sensible Netzwerk mit anderen Netzwerken zu koppeln. Auch kann gewünscht sein, ein HSM, das in einem isolierten Netzwerk verwendet wird, z.B. um kryptographische Schlüssel und Zertifikate für Komponenten des sensiblen Automatisierungssystems zu verwalten, von außen überwacht werden kann. So kann z.B. außerhalb des sensiblen Netzwerks überwacht werden, ob Schlüssel und Zertifikate des sensiblen Netzwerks rechtzeitig erneuert werden, und welche Zertifikate ausgestellt wurden.

Das Automatisierungsnetzwerk 38 ist nur über die sichere Kommunikationsvorrichtung 30 mit dem öffentlichen Netzwerk 31 verbunden, sodass alle zwischen den Netzwerken 31, 38 ausgetauschten Daten durch die sichere Kommunikationsvorrichtung 30 müssen.

Die sichere Kommunikationsvorrichtung 30 dient dabei als Datenschleuse. Die sichere Kommunikationsvorrichtung 30 umfasst eine erste Einrichtung 33 sowie eine zweite Einrichtung 35, welche jeweils als Schleusenrechner ausgebildete Computersysteme sind. Beide Schleusenrechner 33, 35 sind dabei vertrauenswürdige Einrichtungen für das Automatisierungsnetzwerk 38.

Die Schleusenrechner 33, 35 umfassen jeweils ein HSM 32, 34 als ein wechselbares Einsteckmodul. Die HSM 32, 34 sind wie die zuvor beschriebenen HSM 1, 1' der ersten und zweiten Ausführungsform ausgebildet. Sie umfassen insbesondere jeweils eine nicht dargestellte erste Schnittstelle zum Verbinden mit den Schleusenrechnern 33, 35 sowie eine nicht dargestellte zweite Schnittstelle zum Verbinden der HSM 32, 34 miteinander.

Die Verbindung zwischen den zweiten Schnittstellen der HSM 32, 34 bildet dabei die einzige Verbindung zwischen den Schleusenrechnern 33, 35 und somit auch zwischen den Netzwerken 31, 38. Die Verbindung erfolgt dabei durch zwei unidirektionale Verbindungsmittel 36, 37. Das Verbindungsmittel 36 erlaubt lediglich eine Datenübertragung von dem HSM 32 zum HSM 34, während das Verbindungsmittel 37 lediglich eine Datenübertragung von dem HSM 34 zum HSM 32 ermöglicht. Die unidirektionale Übertragung ermöglicht die Realisierung einer Einwegkommunikation mit hoher Verlässlichkeit, ohne dass Datendioden benötigt werden. Weiterhin können spezielle Security-Prüfungen der Daten in einer speziell geschützten Ausführungsumgebung durch das Sicherheitsmodul mit hoher Verlässlichkeit, manipulationsgeschützt erfolgen.

Die jeweiligen HSM 32, 34 sind derart programmiert, dass sie nur verlässliche Daten in das Automatisierungsnetzwerk 38 lassen, und dass nur nicht geheime Daten von dem Automatisierungsnetzwerk 38 an das Netzwerk 31 geschickt werden. Hierzu führt das HSM 34 sicherheitsrelevante Operationen durch, wobei es zum Beispiel ein Zertifikat der Daten, die in das Automatisierungsnetzwerk geschickt werden, überprüft, die Daten komprimiert und/oder die Daten verschlüsselt. Anhand der sicheren Kommunikationsvorrichtung wird verhindert, dass die HSM 32, 34 direkt über die Netzwerke 31, 38 angegriffen werden.

Die sichere Kommunikationsvorrichtung 30 ermöglicht somit anhand der beiden aneinandergereihten HSM 32, 34 eine sichere Datenübertragung zwischen den Netzwerken 31, 38. Diese wird auch dann gewährleistet, wenn die Schleusenrechner 33, 35 Sicherheitslücken aufweisen, zum Beispiel weil sie schon länger nicht mehr aktualisiert wurden.

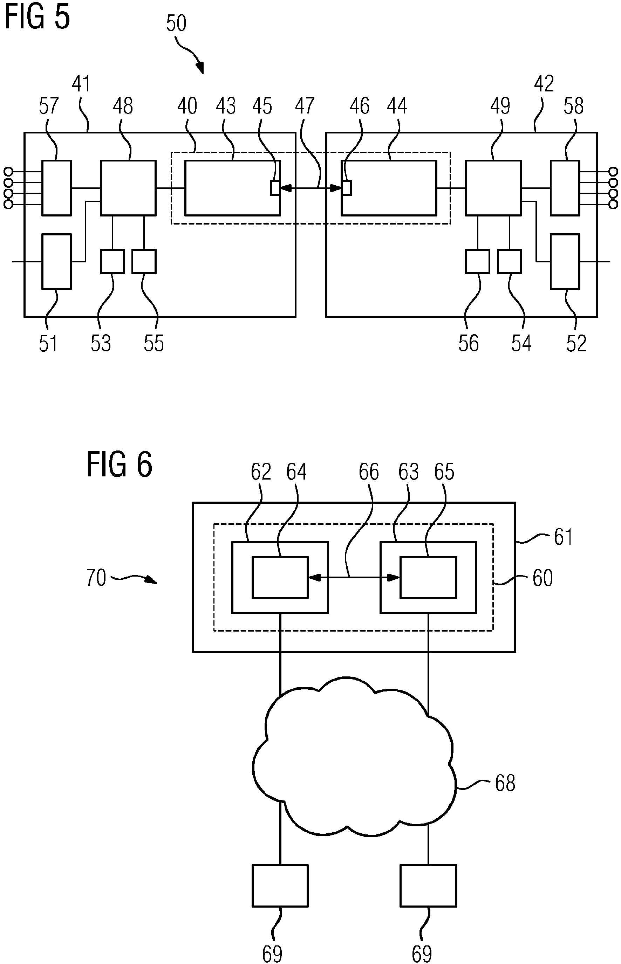

Die Fig. 5 zeigt ein weiteres sicheres System 50 mit einer sicheren Kommunikationsvorrichtung 40 gemäß einer zweiten Ausführungsform. Das sichere System 50 umfasst zwei Einrichtungen 41, 42, die Internet-der-Dinge-Einrichtungen sind.

Die erste Einrichtung 41 umfasst ein HSM 43, einen Prozessor 48 zum Steuern der ersten Einrichtung 41, eine Netzwerkschnittstelle 51 zum Verbinden der Einrichtung 41 mit einem Profinet-Netzwerk, einen Arbeitsspeicher (RAM) 53 zum flüchtigen Speichern von Daten, einen Programmspeicher 55 (Flash-Speicher) zum Speichern von Programmen und eine Eingabe-Ausgabe-Einheit 57 zum Verbinden mit Feldgeräten. Das HSM 43 ist so wie die zuvor beschriebenen HSM 1, 1' ausgebildet und umfasst eine erste Schnittstelle (nicht dargestellt) zum Empfangen von Daten von der ersten Einrichtung 41 sowie eine zweite Schnittstelle 45.

Die zweite Einrichtung 42 ist analog ausgebildet und umfasst ein HSM 44, einen Prozessor 49, eine Netzwerkschnittstelle 52 zum Verbinden der Einrichtung 42 mit einem Profinet-Netzwerk, einen Arbeitsspeicher (RAM) 54, einen Programmspeicher 56 (Flash-Speicher) und eine Eingabe-Ausgabe-Einheit 58. Das HSM 44 ist analog zu den zuvor beschriebenen HSM 1, 1' ausgebildet und umfasst eine erste Schnittstelle (nicht dargestellt) zum Empfangen von Daten von der zweiten Einrichtung 42 sowie eine zweite Schnittstelle 46.

Die beiden zweiten Schnittstellen 45, 46 sind über ein Verbindungsmittel 47, welches hier eine optische Faser ist, miteinander verbunden. Diese Verbindung 47 ist der einzige Kommunikationsweg für den Datenaustausch zwischen den Einrichtungen 41, 42. Die HSM 43, 44 führen an allen auszutauschenden sicherheitsrelevanten Daten von den Einrichtungen 41, 42 sicherheitsrelevante Operationen (Signieren, Verschlüsseln oder dergleichen) durch, sodass zwischen den beiden Einrichtungen 41, 42 lediglich eine sichere Datenübertragung realisiert wird.

Die sicherheitsrelevanten Daten, die zwischen den Einrichtungen 41, 42 ausgetauscht werden, sind zum Beispiel Diagnosedaten, Logdaten und/oder Überwachungsdaten.

Die Fig. 6 zeigt ein geschütztes System 70 mit einer Schutzvorrichtung 60. Das geschützte System 70 umfasst einen Servercluster 61, ein Netzwerk 68 und zwei Clienteinrichtungen 69. Der Servercluster 61 und die Clienteinrichtungen 69 sind an dem Netzwerk 68 gekoppelt, welches hier ein Ethernet-Netzwerk ist.

Der Servercluster 61 umfasst zwei Servereinrichtungen 62, 63 als erste und zweite Einrichtungen. Die Servereinrichtung 62 ist aktiv, während die Servereinrichtung 63 in einem Standby-Modus ist. Falls die aktive Servereinrichtung 62 ausfällt, übernimmt die andere Servereinrichtung 63 die Funktionen der ausgefallenen Servereinrichtung 62. Im Standby-Modus ist die Servereinrichtung 63 nicht aktiv und führt keine Funktionen durch, sie ist aber auch nicht ausgeschaltet, sodass sie Daten von der Servereinrichtung 62 erhalten kann.

Hierzu weist jede der Servereinrichtungen 62, 63 ein HSM 64, 65 auf, welche über deren jeweiligen zweiten Schnittstellen (nicht dargestellt) miteinander kommunizieren. Die HSM 64, 65 sind dabei analog zu den beschriebenen HSM 1, 1' der ersten und/oder zweiten Ausführungsform ausgebildet. Die HSM 64, 65 kommunizieren über ein bidirektionales Verbindungsmittel 66 miteinander, welches als Glasfaser ausgebildet ist. Über das Verbindungsmittel 66 synchronisieren die HSM 64, 65 ihre internen Zustände, indem sie Sitzungsschlüssel, Initialisierungsvektorenwerden und dergleichen austauschen.

Durch das Synchronisieren der HSM 64, 65 miteinander wird sichergestellt, dass beim Ausfall der Servereinrichtung 62 die Servereinrichtung 63 nahtlos den Betrieb übernehmen kann. Ferner wird sichergestellt, dass die beiden HSM 64, 65 nicht versehentlich dieselben kryptographischen Werte wiederverwenden. Dadurch wird zum Beispiel verhindert, dass zwei digitale Zertifikate mit der gleichen Seriennummer ausgestellt werden.

Ferner erfolgt über das Verbindungsmittel 66 eine Überwachung der Aktivität der Servereinrichtung 62. Hierzu überträgt die Servereinrichtung 62 in regelmäßigen Abständen ein Überwachungssignal an die andere Servereinrichtung 63. Falls die Servereinrichtung 63 zu einem Zeitpunkt, zu dem ein Überwachungssignal hätte empfangen werden müssen, kein Überwachungssignal erhält, wird daraus ermittelt, dass die Servereinrichtung 62 nicht mehr korrekt funktioniert und/oder ausgefallen ist. In diesem Fall übernimmt die andere Servereinrichtung 63 nahtlos den Betrieb.

Eine Unterbrechung des Betriebs des Serverclusters 61 kann somit verhindert werden.

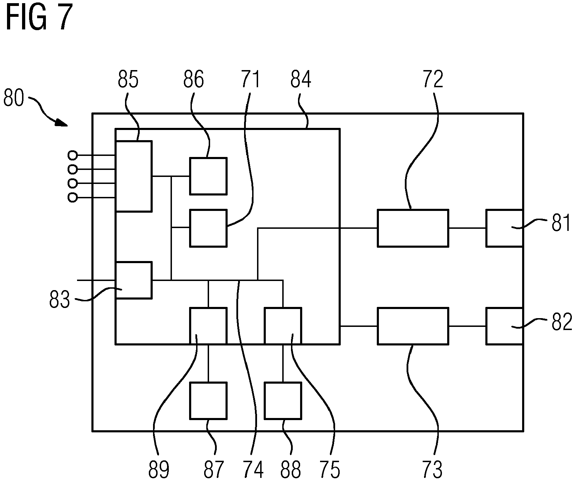

Die Fig. 7 zeigt ein HSM 80 gemäß einer dritten Ausführungsform. Das Hardware-Sicherheitsmodul 80 umfasst einen Chip 84 (Ein-Chip-System) mit einer ersten Schnittstelle 83 zum Verbinden des HSM 80 mit einem Computersystem (nicht dargestellt). Der Chip 84 umfasst zudem eine Tamper-Eingabe-Ausgabe-Schnittstelle 85 zum Verbinden des HSM 80 mit Tampersensoren (nicht dargestellt), mit denen physikalische Eigenschaften des HSM 80 erfasst werden. Der Chip 84 weist zudem eine Tampersteuereinheit 86 zum Steuern der Tampersensoren und zum Auswerten der von den Tampersensoren erfassten Eigenschaften auf.

In dem Chip 84 befinden sich ferner eine Verschlüsselungseinheit 89, um Daten, die in einem flüchtigen Speicher 87 (RAM) gespeichert werden sollen, kryptographisch zu verschlüsseln, sowie eine Speichersteuereinheit 75 zum Steuern eines nicht flüchtigen Speichers 88, in dem Programmcode, der sicherheitsrelevante Operationen definiert, und kryptographische Schlüssel abgelegt sind. Durchgeführt werden die sicherheitsrelevanten Daten durch eine Durchführungseinheit 71.

Darüber hinaus umfasst das HSM 80 zwei zweite Schnittstellen 81, 82, die als optische Anschlüsse ausgebildet sind. Über diese zweiten Schnittstellen 81, 82 kann das HSM 80 mit zwei weiteren HSM verbunden werden. Die über die zweiten Schnittstellen 81, 82 eingehenden und ausgehenden Daten werden anhand von optischen Konvertiereinheiten 72, 73 in das richtige Format gebracht.

Alle sensiblen, schützenswerten Operationen und Daten erfolgen in einer geschützten Ausführungsumgebung, also im HSM 80, und nicht im Computersystem selbst. Dadurch kann das Computersystem gegen Angriffe geschützt werden.

Obwohl die vorliegende Erfindung anhand von Ausführungsbeispielen beschrieben wurde, ist sie vielfältig modifizierbar. Die zweite Schnittstelle kann auch als Anschluss für eine funkbasierte oder drahtgebundene Kopplung ausgebildet sein. Die durch die HSM durchführbaren Operationen können je nach Anwendung unterschiedlich sein. Jedes HSM kann mehrere zweite Schnittstellen aufweisen, mit dem es mit entsprechend vielen weiteren HSM verbunden werden kann.

### Bezugszeichenliste

- 1, 1': Hardware-Sicherheitsmodul
- 2: Computersystem
- 3: erste Schnittstelle
- 4: zweite Schnittstelle
- 5: Kabel
- 6: Speichereinheit
- 7: Durchführeinheit
- 11: weiteres Hardware-Sicherheitsmodul
- 12: weiteres Computersystem
- 13: weitere erste Schnittstelle
- 14: weitere zweite Schnittstelle
- 20: Hardware-Sicherheitsmodulsystem
- 21: Kopplungsmittel
- 29: sicheres System
- 30: sichere Kommunikationsvorrichtung
- 31: öffentliches Netzwerk
- 32: Hardware-Sicherheitsmodul
- 33: Computersystem
- 34: Hardware-Sicherheitsmodul
- 35: Computersystem
- 36: Kopplungsmittel
- 37: Kopplungsmittel
- 38: Automatisierungsnetzwerk
- 39: Feldgerät
- 40: sichere Kommunikationsvorrichtung
- 41, 42: Feldgerät
- 43, 44: Hardware-Sicherheitsmodul
- 45, 46: zweite Schnittstelle
- 47: Kopplungsmittel
- 48, 49: Prozessor
- 50: sicheres System
- 51, 52: Netzwerkschnittstelle
- 53, 54: Arbeitsspeicher
- 55, 56: Programmspeicher
- 57, 58: Eingabe-Ausgabe-Einheit
- 60: Schutzvorrichtung
- 61: Servercluster
- 62, 63: Servereinrichtung
- 64, 65: Hardware-Sicherheitsmodul
- 66: Kopplungsmittel
- 68: Netzwerk
- 69: Clienteinrichtung
- 70: geschütztes System
- 71: Durchführungseinheit
- 72, 73: Konvertiereinheit
- 74: interner Bus
- 80: Hardware-Sicherheitsmodul
- 81, 82: zweite Schnittstell
- 83: erste Schnittstelle
- 84: Chip
- 85: Tamper-Eingabe-Ausgabe-Schnittstelle
- 86: Tampersteuereinheit
- 87: flüchtiger Speicher
- 88: nicht flüchtiger Speicher
- 89: Verschlüsselungseinheit

## Patentansprüche

1. Hardware-Sicherheitsmodul (1, 11) zum Durchführen von sicherheitsrelevanten Operationen an sicherheitsrelevanten Daten; wobei das Hardware-Sicherheitsmodul (1, 11) umfasst:
eine erste Schnittstelle (3, 13) zum Verbinden des Hardware-Sicherheitsmoduls (1, 11) mit einem Computersystem (2, 12) und zum Empfangen der sicherheitsrelevanten Daten, an denen die relevanten Operationen durchzuführen sind, von dem Computersystem (2, 12); und
eine zweite Schnittstelle (4, 14) zum Verbinden des Hardware-Sicherheitsmoduls (1, 11) mit einem weiteren Hardware-Sicherheitsmodul (1, 11).

2. Hardware-Sicherheitsmodul nach Anspruch 1,
**dadurch gekennzeichnet,**
**dass** das Hardware-Sicherheitsmodul (1, 11) ein programmierbares Sicherheitsmodul mit umprogrammierbaren sicherheitsrelevanten Operationen ist.

3. Hardware-Sicherheitsmodul nach Anspruch 1 oder 2,
**dadurch gekennzeichnet,**
**dass** die zweite Schnittstelle (4, 14) einen Anschluss für ein optisches Kopplungsmittel (21), insbesondere für eine optische Faser, einen Anschluss für ein drahtgebundenes Kopplungsmittel und/oder einen Anschluss für ein drahtloses Kopplungsmittel umfasst.

4. Hardware-Sicherheitsmodul nach einem der Ansprüche 1 - 3,
**dadurch gekennzeichnet,**
**dass** das Hardware-Sicherheitsmodul (1, 11) eingerichtet ist, über die zweite Schnittstelle (4, 14) sicherheitsrelevante Daten von dem weiteren Hardware-Sicherheitsmodul (1, 11) zu empfangen, an denen die relevanten Operationen durchzuführen sind.

5. Hardware-Sicherheitsmodul nach einem der Ansprüche 1 - 4,
**dadurch gekennzeichnet,**
**dass** das Hardware-Sicherheitsmodul (1, 11) und/oder das weitere Hardware-Sicherheitsmodul (1, 11) ein Trusted Platform Module ist.

6. Hardware-Sicherheitsmodul nach einem der Ansprüche 1 - 5,
**dadurch gekennzeichnet,**
**dass** die zweite Schnittstelle (4, 14) einen bidirektionalen Austausch von Daten mit dem weiteren Hardware-Sicherheitsmodul (1, 11) oder lediglich einen unidirektionalen Austausch von Daten mit dem weiteren Hardware-Sicherheitsmodul (1, 11) ermöglicht.

7. Hardware-Sicherheitsmodul nach einem der Ansprüche 1 - 6,
**dadurch gekennzeichnet,**
**dass** die sicherheitsrelevanten Operationen zum Schutz der Hardware und/oder der Software des Computersystems (2, 12) durchführbar sind.

8. Hardware-Sicherheitsmodul nach einem der Ansprüche 1 - 7,
**dadurch gekennzeichnet,**
**dass** die sicherheitsrelevanten Operationen ein Entschlüsseln, Verschlüsseln, Signieren, Überprüfen, Ändern, Löschen und/oder Speichern umfassen.

9. Hardware-Sicherheitsmodulsystem (20), umfassend:
ein erstes Hardware-Sicherheitsmodul (1) nach einem der Ansprüche 1 bis 8;
ein zweites Hardware-Sicherheitsmodul (11) nach einem der Ansprüche 1 bis 8; und
ein Kopplungsmittel (21) zum Verbinden der zweiten Schnittstelle (4) des ersten Hardware-Sicherheitsmoduls (1) und der zweiten Schnittstelle (14) des zweiten Hardware-Sicherheitsmoduls (11).

10. Sichere Kommunikationsvorrichtung (30, 40) zum sicheren Übertragen von Kommunikationsdaten zwischen einer ersten und einer zweiten Einrichtung (33, 35, 43, 44), wobei die erste und die zweite Einrichtung (33, 35, 43, 44) lediglich über die sichere Kommunikationsvorrichtung (30, 40) miteinander verbunden sind, wobei die sichere Kommunikationsvorrichtung (30, 40) umfasst:
ein Hardware-Sicherheitsmodulsystem (20) nach Anspruch 9;
wobei das erste Hardware-Sicherheitsmodul (32, 43) und das zweite Hardware-Sicherheitsmodul (34, 44) eingerichtet sind, die Kommunikationsdaten über das Kopplungsmittel (36, 37, 47) auszutauschen.

11. Schutzvorrichtung (70) zum Schützen von zwei redundanten Einrichtungen (62, 63), wobei die Schutzvorrichtung (70) umfasst:
ein Hardware-Sicherheitsmodulsystem (20) nach Anspruch 9; wobei
das erste Hardware-Sicherheitsmodul (64) Teil der ersten Einrichtung (62) und das zweite Hardware-Sicherheitsmodul (65) Teil der zweiten Einrichtung (63) ist; und
das erste Hardware-Sicherheitsmodul (64) und das zweite Hardware-Sicherheitsmodul (65) eingerichtet sind, sich über das Kopplungsmittel (66) gegenseitig zu synchronisieren.
